# EUROPEAN PATENT APPLICATION

(11) **EP 1 790 489 A1**
(43) Date of publication of application: **30.05.2007**
(21) Application number: 05758176.1
(22) Date of filing: 30.06.2005
(51) Int. Cl.: B41J 21/00, G06F 3/12, G06T 3/00, H04N 1/12

(54) **DRIVING METHOD OF PRINTER, PROGRAM OF PRINTER DRIVER, AND RECORDING MEDIUM WITH PROGRAM OF PRINTER DRIVER RECORDED THEREIN**

(30) Priority: 09.07.2004 JP 2004202577
(71) Applicant: SONY CORPORATION, Tokyo 141-0001 (JP)
(72) Inventor: SAKURA, Kohei, c/o SONY CORPORATION,, Tokyo 1410001 (JP); AMANO, Hiroshi; c/o SONY ENGINEERING CORPORATION,, Tokyo 1410031 (JP)
(74) Representative: Müller, Frithjof E.
(86) International application number: PCT/JP2005/012532
(87) International publication number: WO 2006/006475

(57) **Abstract**

The present invention is applied to a medical image output apparatus, for example, an ultrasonic diagnostic apparatus, an endoscopic apparatus, etc., and the printer driver lays out the images related to a plurality of jobs, which are input in sequence, on a piece of paper, and outputs the images to the printer 3.

## Description

### Background of Invention

### Technical Field

The present invention relates to a method of driving a printer, a printer driver program, and a recording medium recording the printer driver program, and can be applied to a medical image output apparatus, for example, an ultrasonic diagnostic apparatus, an endoscopic apparatus, etc. In the present invention, the printer driver lays out the images related to a plurality of the jobs, which are input in sequence, on a piece of paper, and outputs the images to the printer, thereby making it possible to print a plurality of images on a piece of paper in a medical image output apparatus, etc., by a computer while effectively avoiding the deterioration of user-friendliness as a dedicated apparatus.

### Background Art

To date, in a medical image output apparatus, such as an ultrasonic diagnostic apparatus, an endoscopic apparatus, etc., diagnostic images based on ultrasonic diagnostic images, endoscopic images, etc., have been allowed to be output by a video signal to be monitored by a monitoring apparatus, and the images displayed on this monitoring apparatus have been allowed to be printed as necessary. Thus, in a printer which is applied to a medical image output apparatus of this kind, images displayed on the monitoring apparatus have been captured to be printed, and a plurality of pieces of such images are captured and printed on a piece of paper.

At the same time, in recent years, such medical image output apparatuses are formed by a system using a computer, and such medical image output apparatuses using a computer are designed to ensure the user friendliness of a dedicated apparatus. That is to say, in a medical image output apparatus, an application program is automatically started by turning on the power to construct a system. Also, for example, by a capture-menu operation, a diagnostic image by a moving image is captured to be displayed as a still image, and this still image is automatically filed. Also, by a print-menu operation, the still image filed in this manner is printed.

In a computer, an application program passes a job to a printer driver to execute the print processing. In an application program of a usual computer, when this job is passed, a user interface of the printer driver is opened to display a print-menu screen, the number of print pages, etc., are set by the setting of the printer driver using the print-menu screen, and furthermore, a plurality of pages in a file to be printed are allowed to be printed on a piece of paper. In contrast, in a medical image output apparatus based on a computer, the display of such a print-menu screen is stopped, and the job is passed to the printer driver by the standard setting to print a requested diagnostic image, thereby the user-friendliness is ensured as a dedicated apparatus concerning printing. On the processing concerning printing like this, for example, Japanese Unexamined Patent Application Publication No. 5-11943 has proposed a method of selecting a printer driver related to such a job from an application program.

Incidentally, in a medical image output apparatus based on a computer, if a plurality of diagnostic images are allowed to be printed on a piece of paper, it is possible to easily compare the plurality of diagnostic images, and to reduce the running cost furthermore. Thus, it is considered to be convenient. However, even in the case of printing a plurality of diagnostic images on a piece of paper, it is desirable to effectively avoid the deterioration of user-friendliness as a dedicated apparatus in the medical image output apparatus based on a computer.

### Disclosure of Invention

The present invention has been made in consideration of the above points. It is an aim of the present invention to propose a method of driving a printer, a printer driver program, and a recording medium recording the printer driver program which are capable of printing a plurality of images on a piece of paper in a medical image output apparatus based on a computer, etc.

In order to solve these problems, according to the present invention, there is provided a method of driving a printer for passing a print job of an application program to a printer driver and driving the printer by the printer driver to print a requested image, the method including the steps of: in the printer driver, storing and holding a plurality of pieces of image data related to a plurality of jobs passed in sequence from the application program, when a predetermined number of images of the image data are stored, arranging the predetermined number of images on a piece of paper and printing by driving the printer on the basis of the image data.

With the arrangement of the present invention, in the method of driving a printer, the printer driver stores and holds a plurality of pieces of image data related to a plurality of jobs passed in sequence from the application program. When a predetermined number of images of the image data are stored, the predetermined number of images are arranged and printed on a piece of paper by driving the printer on the basis of the image data. Thus, it is possible to arrange and print the images related to individual jobs on a piece of paper by the application program sending the print jobs in sequence without influencing the user interface of the application program at all. Accordingly, in a medical image output apparatus based on a computer, etc., it is possible to print a plurality of images on a piece of paper while effectively avoiding the deterioration of user-friendliness as a dedicated apparatus.

Also, according to the present invention, there is provided a printer driver program for driving a printer by a print job passed from an application program by execution by calculation processing means, the program including the steps of: storing image data for storing and holding a plurality of pieces of image data related to a plurality of jobs passed in sequence from the application program, when a predetermined number of images of the image data are stored, printer driving for driving the printer such that the predetermined number of images are arranged to be printed on a piece of paper by driving the printer on the basis of the stored image data.

Thus, with the arrangement of the present invention, in a medical image output apparatus based on a computer, etc., it is possible to provide a printer driver program capable of printing a plurality of images on a piece of paper while effectively avoiding the deterioration of user-friendliness as a dedicated apparatus.

Also, according to the present invention, there is provided a recording medium recording a printer driver program for driving a printer of a print job passed from an application program by execution by calculation processing means, the printer driver program including the steps of: storing image data for storing and holding a plurality of pieces of image data related to a plurality of jobs passed in sequence from the application program, when a predetermined number of images of the image data are stored, printer driving for driving the printer such that the predetermined number of images are arranged to be printed on a piece of paper by driving the printer on the basis of the stored image data.

Also, with the arrangement of the present invention, in a medical image output apparatus based on a computer, etc., it is possible to provide a recording medium recording a printer driver program capable of printing a plurality of images on a piece of paper while effectively avoiding the deterioration of user-friendliness as a dedicated apparatus.

By the present invention, in a medical image output apparatus based on a computer, etc., it is possible to print a plurality of images on a piece of paper while effectively avoiding the deterioration of user-friendliness as a dedicated apparatus.

### Brief Description of the Drawings

Fig. 1 is a block diagram illustrating a medical image output apparatus according to an embodiment of the present invention.
Fig. 2 is a flowchart illustrating the processing procedure of a central processing unit by a printer driver in the medical image output apparatus of Fig. 1.
Fig. 3 is a plan view illustrating a print result by the execution of the processing procedure of Fig. 2.
Fig. 4 is a flowchart illustrating the processing procedure of the central processing unit at the time of forced printing by the printer driver in the medical image output apparatus of Fig. 1.
Fig. 5 is a plan view illustrating a print result by the execution of the processing procedure of Fig. 4.
Fig. 6 is a flowchart illustrating the processing procedure of the central processing unit at the time of displaying a page by the printer driver in the medical image output apparatus of Fig. 1.

### Best Mode for Carrying Out the Invention

In the following, a detailed description will be given of an embodiment of the present invention with reference to the drawings appropriately.

### (1) Configuration of Embodiment

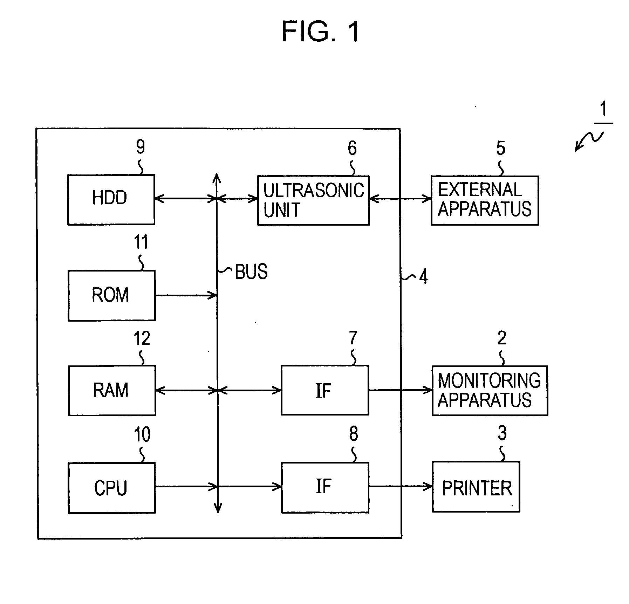

Fig. 1 is a medical image output apparatus 1 related to ultrasonic diagnosis according to an embodiment of the present invention. Diagnostic images by ultrasonic waves are obtained and displayed onto a monitoring apparatus 2, and the diagnostic images are printed by a printer 3. Thus, the monitoring apparatus 2 includes, for example, a liquid crystal display apparatus, and displays diagnostic images by the video data output from a computer 4. The printer 3 prints the diagnostic images based on the print data output from the computer 4 under the control of the computer 4.

An external apparatus 5 includes a probe related to this ultrasonic diagnosis, a drive circuit for driving this probe, a signal processing circuit for processing a signal of the reflected wave detected by the probe, etc. The external apparatus 5 outputs ultrasonic waves to be supplied for ultrasonic diagnosis under the control of the computer 4, and outputs the receive result of the reflected wave of the ultrasonic waves.

The computer 4 controls the operation of the external apparatus 5 to obtain the image data by the diagnostic result to display the image data on the monitoring apparatus 2, and prints the images by the printer 3. That is to say, in the computer 4, an ultrasonic unit 6 is formed by a PCI board used for connecting the external apparatus 5, controls the operation of the external apparatus 5 by the command input through a bus BUS, performs the signal processing of the output signal from the external apparatus 5, and outputs the image data of the diagnostic result to the bus BUS.

An interface (IF) 7 drives the monitoring apparatus 2 by the image data output through the bus BUS, thereby displaying diagnostic images based on the diagnostic result, various menus, etc. An interface 8 controls the operation of the printer 3 by the commands output through the bus BUS, thereby printing a requested diagnostic image.

A hard disk drive (HDD) 9 records and holds various programs of this computer. A central processing unit (CPU) 10 acquires work areas in a random access memory (RAM) 12 in accordance with the recording of a read-only memory (ROM) 11, and executes the programs recorded in the hard disk drive 9, thereby controlling the operation of the entire medical image output apparatus 1.

In this regard, in this embodiment, the various programs recorded in the hard disk drive 9 in this manner are provided by being installed in the medical image output apparatus 1 in advance. However, these programs may be provided by downloading them through a network, such as the Internet, and may be furthermore provided by downloading them through a recording medium. For such a recording medium, a various recording medium, such as an optical disc, a memory card, etc., can be widely applied.

The central processing unit 10 starts up the programs related to the OS (Operating System) of the various programs recorded in the hard disk drive 9 by turning on the power, and subsequently starts the application programs related to the medical image output apparatus 1. Also, when the application programs are started in this manner, a predetermined menu screen is displayed on the monitoring apparatus 2.

The central processing unit 10 displays a setting screen of the printer driver by a predetermined operation in a state of displaying this menu screen, and the setting of the printer driver is carried out by the operator's input in this setting screen. Here, in this embodiment, the settings are allowed on the number of prints by this setting screen, the number of images to be printed on a piece of paper, a print mode in which printing is automatically started when the number of images to be printed reaches the number of images to be printed on a piece of paper, and a resize-to-fit mode in which the size of the images are automatically changed to the size corresponding to a printable area. In this regard, the number of images to be printed on a piece of paper can be set by the number of divisions of paper divided by the number of images to be printed, and the number of divisions can be selected from 2, 4, or 9. The central processing unit 10 carries out the setting of the printer driver by the setting in the setting screen.

At the same time, if the operator selects a menu in the menu screen at the time of start-up, the central processing unit 10 detects this menu selection by input means not shown in the figure, and controls the operation of each part in response to the operation in this menu screen. When the operator operates a diagnostic menu, the central processing unit 10 controls the operation of the external apparatus 5 through an ultrasonic unit 6 by controlling each of the parts, thereby obtaining the image data based on the ultrasonic diagnosis in sequence. Also, the central processing unit 10 displays the image based on the obtained image data onto the monitoring apparatus 2, and thereby displaying the image based on the ultrasonic diagnosis by the moving image. Also, in a state of displaying the moving image in this manner, the central processing unit 10 captures a still image from this moving image by the selection of a predetermined menu, and prints the image based on the captured still image from the printer 3 by the operation of the subsequent print menu.

In this processing, the central processing unit 10 automatically files the still images related to the capture by the application program of the medical image output apparatus 1, and temporarily saves the images into the hard disk drive 9. Also, the print job related to this temporarily saved file is passed to the printer driver by an instruction to print, and thereby the print processing is executed by the processing of the printer driver.

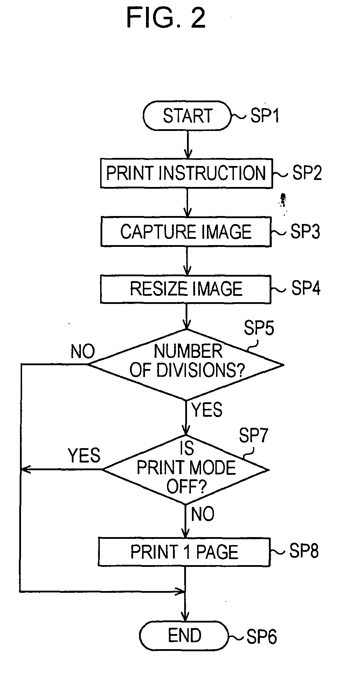

Here, Fig. 2 is a flowchart illustrating the processing procedure of the print processing by this printer driver. When the central processing unit 10 obtains a print instruction from an application program, the central processing unit 10 starts this processing procedure, and proceeds from step SP1 to SP2, accepts a print instruction, and captures and holds the image data of this print instruction in the subsequent step SP3. Thus, the central processing unit 10 receives a print job from the printer driver.

Also, in the subsequent step SP4, the central processing unit 10 changes the size of the image of the image data to the size to be printed. Here, for example, when the mode is set to the resize-to-fit mode by the setting screen of the printer driver, the central processing unit 10 corrects the size of the image such that the image can be printed in the printable range of the printer 3. Also, the central processing unit 10 corrects the size of the image to the size corresponding to the number of divisions set in the setting screen of the printer driver. Also, the central processing unit 10 lays out the images whose sizes have been corrected in this manner to correspond to the number of divisions.

Subsequently, the central processing unit 10 proceeds to step SP5, and determines here whether the number of jobs of the print instruction has reached the number of divisions. If a negative result is obtained here, the central processing unit 10 proceeds to step SP6, and terminates this processing procedure. Thus, the central processing unit 10 repeats this processing procedure and stores the image data each time a print job is provided from the application program. When the number of jobs reaches the number of divisions by the repetition of this processing, an affirmative result is obtained in step SP5, and thus the processing proceeds from step SP5 to step SP7.

Here, the central processing unit 10 determines whether the print mode is set off from the setting screen of the printer driver. Here, if an affirmative result is obtained, the processing proceeds to step SP6 and terminates this processing procedure also in this case. On the other hand, if the print mode is set on, the central processing unit 10 proceeds from step SP7 to step SP8, outputs a command to be used for printing one page to the printer 3. Also, the central processing unit 10 outputs the print data to execute the print processing by the response to this command from the printer 3.

On the assumption of the processing of the step SP8, the central processing unit 10 repeatedly executes the processing shown in Fig. 2 to repeat the processing of step SP4 while the number of jobs becomes the number of divisions, and thus lays out in advance a plurality of images related to the plurality of jobs so as to print the images on a piece of paper. The central processing unit 10 executes the print processing using this layout in step SP8, then the processing proceeds to step SP6, and terminates this processing procedure.

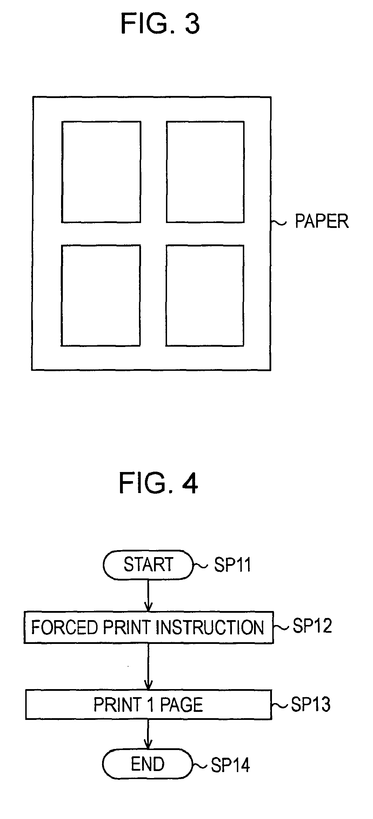

Specifically, as shown in Fig. 3, the central processing unit 10 lays out the image of each job on each print position of the paper in sequence in the processing of step SP4 for each repetition of the processing procedure in Fig. 2., and finally executes the print processing using this layout in the processing in step SP8. In this regard, Fig. 3 is a plan view illustrating the print result in the case of setting the number of divisions to 4. In this case, each image of the four jobs input successively is put together on a piece of paper and is printed.

Thus, in this embodiment, it becomes possible to print a plurality of images on a piece of paper while effectively avoiding the deterioration of user-friendliness as a dedicated apparatus with an easy configuration of only changing the printer driver with respect to the medical image output apparatus of a known configuration.

On the other hand, when the processing procedure shown in Fig. 2 is terminated without executing the processing in step SP8, the central processing unit 10 notifies this state to the application program of the medical image output apparatus 1 through the printer driver. Also, by this notification, the central processing unit 10 displays a forced-print menu to the monitoring apparatus 2 by the application program, and instructs the printer driver to forcible print by the operation of this forced-print menu.

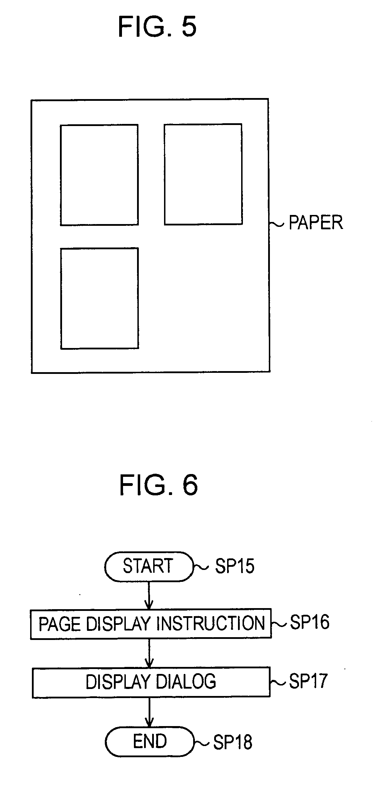

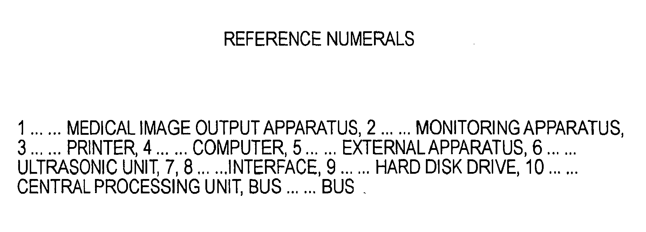

Here, Fig. 4 is a flowchart illustrating the processing procedure of the central processing unit 10 at the time of forced printing of this printer driver. When the printer driver is instructed to print forcibly from an application program, the central processing unit 10 starts this processing procedure, and proceeds from step SP11 to SP12. Here, the central processing unit 10 receives a forced print instruction, and then instructs the printer 3 to print the page of the image data held by the printer driver. At this time, as shown in Fig. 5 in contrast to Fig. 3, the central processing unit 10 prints a plurality of images on a piece of paper using the arrangement laid out by the processing of step SP4 in the processing procedure of Fig. 2.

Thus, in this embodiment, for example, when the printer driver is set to print by division into four, and an application program passed five jobs to the printer driver in sequence, the images of the first four jobs out of these five jobs are automatically printed on a piece of paper by the setting on the print mode, and then one image of the last job can be printed using this forced print. Also, in this case, if the print mode is set off, when five jobs are passed to the printer driver, and then forced print is instructed finally, the image of the four jobs is printed on a piece of paper, respectively, and then the image of the remaining one job can be printed on a piece of paper. Also, if the print mode is set on or off, for example, at the time when three jobs out of five jobs are passed, it is possible to print three images by forced print, and then to print the remaining two jobs by forced print again.

Also, when the central processing unit 10 terminates the processing procedure shown in Fig. 2 without executing the processing of step SP8, the central processing unit 10 displays a page-display menu along with the forced print menu by the notification of the status from the printer driver. Also, the printer driver executes the processing procedure of Fig. 6 by the menu operation of this page display.

Here, the central processing unit 10 proceeds from step SP15 to step SP16, receives the instruction of page display from the application program, and then proceeds to step SP17. Here, the central processing unit 10 starts up the user interface of this printer driver, and displays the print result based on the image data stored by the processing procedure in Fig. 2. Thus, in this embodiment, it is possible to check what print result is obtained by forced print. The central processing unit 10 displays the print result together with the forced-print menu by a dialog, and thus when the forced-print menu is operated, the central processing unit 10 executes the processing procedure of Fig. 4. Thus, the central processing unit 10 can also execute the forced print processing through the user interface of this printer driver. When the central processing unit 10 executes the processing procedure of step SP 17, the central processing unit 10 proceeds to step SP18, and terminates this processing procedure.

### (2) Operation of Embodiment

In the above configuration, in this medical image output apparatus 1, the image data of the diagnostic images of the ultrasonic diagnosis is obtained in sequence by the ultrasonic unit 6 under the control of the external apparatus 5 through the ultrasonic unit 6 by the operator's operation, and the moving image of the image data is displayed onto the monitoring apparatus 2. Thus, it is possible to use this medical image output apparatus 1 for various ultrasonic diagnoses.

In the medical image output apparatus 1, the diagnostic image by the ultrasonic waves is displayed onto the monitoring apparatus 2 in this manner, and when the operator instructs to capture, the still image is captured from the diagnostic image based on the moving image, and is displayed onto the monitoring apparatus 2. Also, when the operator instructs to print, the print job of this still image is passed from the application program of the medical image output apparatus 1 to the printer driver, and the printer driver drives the printer 3 to print the diagnostic image by the still image.

In this processing, in the medical image output apparatus 1, the print job based on the still image is passed from the application program to the printer driver for each print instruction by the operator, and the printer driver stores in sequence a plurality of pieces of the image data of a plurality of jobs. Also, when a predetermined number of diagnostic images based on the image data are stored, a predetermined number of diagnostic images are arranged and printed on a piece of paper by driving the printer 3 on the basis of the stored image data.

Thus, in the medical image output apparatus 1, it is possible to arrange and print images of individual jobs on a piece of paper without changing the user interface by the application program at all. Accordingly, in a medical image output apparatus based on a computer, it is possible to print a plurality of images on a piece of paper while effectively avoiding the deterioration of user-friendliness as a dedicated apparatus.

In this series of processing, in the medical image output apparatus 1, the number of diagnostic images to be printed on a piece of paper is set in the printer driver in this manner by the setting of the operator in advance. Also, the number of print pages, and various modes in printing are set in the printer driver in the same manner. Thus, in the medical image output apparatus 1, when the operation of print is actually executed, a series of operations can be executed without the printer driver opening a graphical user interface related to printing, and thus it is possible to effectively avoid the deterioration of user-friendliness as a dedicated apparatus.

Also, by setting this mode, even if a predetermined number of diagnostic images are stored, the printing is set not to be carried out, and the diagnostic images based on the stored image data are arranged and printed on a piece of paper by a forced print instruction. It is also possible to effectively avoid the deterioration of user-friendliness as a dedicated apparatus, and to improve the user-friendliness for the operator.

Also, when automatic printing is performed at the time of storing a predetermined number of pages, if the number of the images remaining in the printer driver does not reach the predetermined number, and furthermore, at any point in time during the diagnosis, the diagnostic images based on the image data stored in the printer driver can be printed on a piece of paper using the layout based on the number of divisions of the setting. Thus, it is possible to effectively use the result for various diagnoses.

Also, when the printing is carried out in this manner, and if the operator specifies the page display, the image based on the image data held by the printer driver is displayed by the layout to be used for printing by the user interface of the printer driver. Thus, it is possible to compare and check a plurality of diagnostic images on the display of the monitoring apparatus 2 without printing each time. By this means, it is also possible to improve user-friendliness. In this case, the plurality of diagnostic images is displayed by thumbnail images.

### (3) Advantages of Embodiment

With the above-described arrangement, the printer driver lays out the images of a plurality of jobs input in sequence on a piece of paper, and outputs the images to the printer. Thus, in a medical image output apparatus based on a computer, etc., it is possible to print a plurality of images on a piece of paper while effectively avoiding the deterioration of user-friendliness as a dedicated apparatus.

Also, the predetermined number of pages is the number of pages set in advance, and thus, when the operation of print is actually executed, a series of operations can be executed without the printer driver opening a graphical user interface related to printing, and thus it is possible to effectively avoid the deterioration of user-friendliness as a dedicated apparatus.

Also, in response to an instruction of an application program or a user operation by a user interface, even before the predetermined number of images based on the image data are stored, diagnostic images are printed by driving the printer on the basis of the stored image data. Thus, for example, if the number of the images remaining in the printer driver does not reach the predetermined number, and furthermore, at any point in time during the diagnosis, the diagnostic images based on the image data stored in the printer driver can be printed on a piece of paper using the layout based on the number of divisions of the setting. Thus, it is possible to effectively use the result for various diagnoses.

Also, the images to be printed on a piece of paper in this manner is displayed by an instruction of an application program. Thus, it is possible to compare and check a plurality of diagnostic images on the display of the monitoring apparatus 2 without printing each time. By this means, it is also possible to improve user-friendliness.

### (4) Another Embodiment

In this regard, in the above-described embodiment, a description has been given of the case where the processing procedure of Fig. 6 is executed and the print result is displayed by the instruction of an application program. However, the present invention is not limited to this, and the print result may be displayed in response to the user's operation based on the user interface of this printer driver.

Also, in the above-described embodiment, a description has been given of the case where the present invention is applied to a medical image output apparatus using ultrasonic waves. However, the present invention is not limited to this, and the present invention can be applied to a medical image output apparatus using an endoscope. Furthermore, the present invention is not limited to a medical image output apparatus, and can be widely applied to various image output apparatuses and image processing apparatuses.

### Industrial Applicability

The present invention can be applied to a medical image output apparatus, for example, an ultrasonic diagnostic apparatus, an endoscopic apparatus, etc.

## Claims

1. A method of driving a printer for passing a print job of an application program to a printer driver and driving the printer by the printer driver to print a requested image, the method comprising the steps of:
in the printer driver, storing and holding a plurality of pieces of image data related to a plurality of jobs passed in sequence from the application program, when a predetermined number of images of the image data are stored, arranging the predetermined number of images on a piece of paper and printing by driving the printer on the basis of the image data.

2. A printer driver program for driving a printer by a print job passed from an application program by execution of calculation processing means, the program comprising the steps of:
storing image data for storing and holding a plurality of pieces of image data related to a plurality of jobs passed in sequence from the application program,
when a predetermined number of images of the image data are stored, printer driving for driving the printer such that the predetermined number of images are arranged to be printed on a piece of paper by driving the printer on the basis of the stored image data.

3. The printer driver program according to Claim 2,
wherein the predetermined number is a number of pieces set in advance.

4. The printer driver program according to Claim 2, further comprising the step of:
forcibly driving for driving the printer so as to print the image of the stored image data on a piece of paper by the arrangement of the step of printer driving even before the predetermined number of images based on the image data are stored in response to an instruction of the application program or a user operation by a user interface.

5. The printer driver program according to Claim 2, further comprising the step of:
displaying for displaying on a display the images arranged to be printed on a piece of paper by the step of printer driving in response to an instruction of the application program or a user operation by a user interface.

6. A recording medium recording a printer driver program for driving a printer by a print job passed from an application program by execution of calculation processing means,
the printer driver program comprising the steps of:
storing image data for storing and holding a plurality of pieces of image data related to a plurality of jobs passed in sequence from the application program,
when a predetermined number of images of the image data are stored, printer driving for driving the printer such that the predetermined number of images are arranged to be printed on a piece of paper by driving the printer on the basis of the stored image data.
